# EUROPEAN PATENT SPECIFICATION

(11) **EP 1 403 231 B1**
(45) Date of publication and mention of the grant of the patent: **21.11.2012**
(21) Application number: 02728214.4
(22) Date of filing: 31.05.2002
(51) Int. Cl.: C04B 38/00, B01J 35/04

(54) **METHOD OF PRODUCING A POROUS CERAMIC SINTERED BODY**
VERFAHREN ZUR HERSTELLUNG EINES PORÖSEN KERAMIKSINTERKÖRPERS
PROCEDE DE PRODUCTION D'UN CORPS CERAMIQUE FRITTÉ POREUX

(30) Priority: 31.05.2001 JP 2001165548
(43) Date of publication of application: 31.03.2004
(60) Divisional application: 06018440.5
(73) Proprietor: IBIDEN CO., LTD., Ogaki-shi, Gifu-ken 503-0917 (JP); Toyota Jidosha Kabushiki Kaisha, Aichi-ken, 471-0826 (JP)
(72) Inventor: TAOKA, Noriyuki, IBIDEN CO., LTD., Ibi-gun, Gifu 501-0601 (JP); OHNO, Kazushige, IBIDEN CO., LTD., Ibi-gun, Gifu 501-0601 (JP); KOMORI, Teruo, IBIDEN CO., LTD., Ibi-gun, Gifu 501-0601 (JP); HIROTA, Shinya, TOYOTA JIDOSHA KABUSHIKI KAISHA, Toyota-shi, Aichi 471-0826 (JP); OGURA, Yoshitsugu, TOYOTA JIDOSHA KABUSHIKI KAISHA, Toyota-shi, Aichi 471-0826 (JP); TANAKA, Toshiaki, TOYOTA JIDOSHA KABUSHIKI KAISHA, Toyota-shi, Aichi 471-0826 (JP); ITOH, Kazuhiro, TOYOTA JIDOSHA KABUSHIKI KAISHA, Toyota-shi, Aichi 471-0826 (JP)
(74) Representative: Grünecker, Kinkeldey, Stockmair & Schwanhäusser
(86) International application number: PCT/JP2002/005396
(87) International publication number: WO 2002/096827

(56) References cited:
- EP-A- 1 070 687
- WO-A-00/78451
- WO-A-02/26351
- JP-A- 1 093 476
- JP-A- 7 215 777
- JP-A- 9 077 573
- US-A- 4 632 683
- US-A- 5 185 110
- HISAO ABE ET AL: "PREPARATION AND WATER PERMEATION PROPERTY OF BIMODAL POROUS CORDIERITE CERAMICS" JOURNAL OF THE CERAMIC SOCIETY OF JAPAN, INTERNATIONAL EDITION, FUJI TECHNOLOGY PRESS, TOKYO, JP, vol. 100, no. 1, January 1992 (1992-01), pages 32-36, XP000269717 ISSN: 0912-9200

## Description

This invention relates to a method of producing a porous sintered body according to claim 1.

A porous silicon carbide sintered body can be taken from prior art documents US 4,632,683.

Recently, the number of automobiles exponentially increases and the amount of exhaust gas from the automobile increases accompanied therewith. Particularly, various substances included in the exhaust gas of the diesel engine is a cause of atmospheric pollution. And also, fine particles in the exhaust gas (diesel particulate, hereinafter abbreviated as PM) are reported to become a cause bringing about health disturbance upon occasion. Therefore, it is a quick issue for human family to take a countermeasure for removing PM in the exhaust gas of the automobile.

Under these circumstances, there has hitherto been proposed various apparatuses for purifying the exhaust gas. As a most general apparatus for the purification of the exhaust gas, there is a structure that a casing is arranged on the way of an exhaust pipe connected to an exhaust manifold of an engine and a diesel particulate filter (hereinafter abbreviated as DPF) is arranged in the casing. As a material for the DPF are used ceramics in addition to metals or alloys. As a typical filter made of the ceramic is well-known cordierite. Lately, silicon carbide having a high heat resistance and mechanical strength and being chemically stable is used as the material for the DPF.

Now, the DPF is demanded to have performances such as high PM catching ability (i.e. high filtration efficiency), low pressure loss and the like. However, in case of the DPF also acting as a catalyst carrier (ceramic), the pore size and porosity of the ceramic sintered body (catalyst carrier) become substantially small due to the holding of the catalyst, and hence the pressure loss becomes large. Particularly, such a pressure loss is not so large in the initial stage of catching PM, but there is a problem that the pressure loss violently increases as the deposit amount of PM becomes large.

For this end, there is a thinking that the pore size and porosity of the ceramic sintered body are previously set to large values. For example, there are proposed ceramic sintered bodies in which ceramic particles themselves are made large to increase the pore size or the porosity, concretely those having an average pore size of not less than 15 µm and a porosity of not less than 50%. Certainly, the DPF produced by such a method can prevent the substantial lowering of the pore size and the porosity due to the catalyst holding and realize the reduction of the pressure loss.

Heretofore, there was a technique that a reduction catalyst of occluding NOx is carried on a diesel engine in view of environmental pollution (see JP-A-6-159037). This technique is a method wherein NOx in the diesel exhaust gas at a lean state is occluded in at least one element selected from an alkali metal, an alkaline earth metal and a rare earth element as a nitrate. That is, this technique is a method wherein a certain amount of NOx is first occluded with the above element in the form of nitrate and when the occlusion is saturated, NO₂ gas is produced from the nitrate by making rich an air-fuel ratio through an ignition of an engine or the like and reacted with an unburnt HC or CO to purify into innoxious N₂ gas. According to this technique, it is possible to simultaneously purify PM and harmful gases in the exhaust gas, but there is a problem that the fuel consumption is degraded because the air-fuel ratio of the rich state should be repeated during the operation.

In this connection, the conventional DPF can attain the reduction of the pressure lose because fine PM is easy to pass through the cell wall, but it is inversely difficult to catch the PM and there is a problem of lowering the filtration efficiency. Thus, since the small pressure loss and the high filtration efficiency are conflict properties even in the deposition of PM, it is difficult to obtain DPF having both the good properties.

The prior are document JP-A-7215777 discloses the pore forming material of iron compound and SiC powder is used. The powder is pressed by Cold Isostatic Press with a high pressure (2000kg/cm²) to be molded. Said prior art document proposes that the metallic composition is preferably added as forming the large pores.

The further prior art document EP 1 338 322 A discloses the use of two or three SiC powders having the different pore size and a pore forming material in combinations

It is an objective of the present invention to provide a method of producing a porous silicon carbide sintered body, wherein low pressure loss and high filtering efficiency can be achieved.

According to the present invention, said objective is solved by a method according to independent claim 1. Preferred embodiments are laid down in the dependent claim.

According to the present teaching, the above DPF is desirable that at least one NOx occluding reduction catalyst particularly selected from the group consisting of noble metals, alkali metals, alkaline earth metals and rare earth elements is carried as a catalyst coat layer on a surface layer portion or an interior (i.e. inner surfaces of the above large pores and small pores) of a catalyst carrier having a honeycomb structure made of the porous ceramic sintered body having communicated pores, which are constituted with large pores at least existing on a surface layer portion of the sintered body and small pores existing on the surface layer portion or inside of the sintered body and having a size relatively smaller than that of the large pore, and a porosity of 40-80%, preferably so as to cover the surface of each ceramic particle constituting the catalyst carrier.

In the porous ceramic sintered body according to the present teaching having the above construction, at least a part of the large pores constituting the communicated pores are existent on the surface of the sintered body at an exposed or opened state. Therefore, even if PM is deposited, the deposition thickness of PM adhered to the surface of the sintered body becomes not so thick and the pressure loss becomes not so large and hence the PM can be efficiently filtered and removed over a long time.

That is, the increase of the pressure loss due to the thickness of the caught PM can be suppressed by adhering and depositing a part of the PM, which will be naturally deposited on the surface of the sintered body, into the inner surfaces of the large pores at substantially the same effect as in case of substantially increasing the filtering area.

Also, the ceramic sintered body according to the invention hardly clog the communicated pores even in the deposition of particles and decreases the pressure loss as compared with the ceramic sintered body simply containing only the large pores because the small pores are also existent. Thus, the ceramic sintered body according to the invention has a feature of possessing a high PM catching ability and is useful as a catalyst carrier.

Moreover, the formation of the small pores communicating to the large pores in the sintered body with respect to the formation of the large pores through the addition of the pore forming material can be attained by the mixture of SiC having a large particle size and SiC having a small particle size. According to the present teaching, the large pores may be existent in the inside of the sintered body in addition to the surface layer portion thereof. This is particularly preferable in view of the increase of the filtering area of the ceramic sintered body. That is, the catching efficiency of PM can be improved by changing the flow rate of the exhaust gas passing through the large pores existing in the inside of the sintered body to further catch fine PM, which is not caught by the inner surfaces of the large pores existing on the surface of the sintered body or at a state of exposing or opening to the surface of the sintered body and is penetrated into the inside of the communicated pores together with the exhaust gas, among the PMs in the exhaust gas. Although the large pores are existent in the inside of the ceramic sintered body, since almost of the large pores are at a state of communicating through the small pores, the particulate can be efficiently caught without troubles.

The ceramic sintered body has a structure that the mechanical strength is excellent in addition to the large filtering area. According to the present teaching, therefore, the number of large pores exposing or opening to the surface of the sintered body among the above large pores per unit area is adjusted to the above range. By such a structure, the effective filtering area in the sintered body can be surely increased. That is, when the number is less than 10 pores/mm², the number of the large pores exposing or opening to the surface of the sintered body is too less and the effective and sufficient filtering area in the sintered body can not be ensured. Inversely, when the number exceeds 100 pores/mm², the porosity is increased to lower the mechanical strength of the sintered body and also there is a fear that the sintered body is not established as a structural body for filtration.

According to the present teaching, it is preferable that the volume ratio of the large pores occupied in the ceramic sintered body is adjusted to the above range. This is to obtain the increase of the filtering area in the sintered body. That is, when the ratio of the large pores occupied is less than 5% as a volume ratio, the number of the large pores is too small and the increase of the effective filtering area in the sintered body can not be obtained. While, when the volume ratio exceeds 15%, the mechanical strength of the sintered body lowers due to the increase of the porosity.

According to the present teaching, the average pore size of the large pore is adjusted to 1.5 times or more the average pore size of the small pore. When the average pore size of the large pore is less than 1.5 times the average pore size of the small pore, the filtering area aiming at the invention can not sufficiently be ensured if the average pore size of the small pore is a suitable size from a viewpoint of the repairing ability, and hence the clogging is caused in a relatively premature time and the effect of suppressing the increase of the pressure loss is not developed. On the other hand, if the average pore size of the large pore is a suitable size from a viewpoint of the reduction of the pressure loss, PM as a material to be caught easily passes and it is difficult to obtain a high catching ability.

According to the present teaching, the average pore size of the small pore is to the above range adjusted. Thus, the reduction of pressure loss and the improvement of high filtering efficiency can be surely attained. When the average pore size of the small pore is less than 5 µm, the small pores are easily and prematurely clogged with a small amount of the material to be caught and there is a fear of violently increasing the pressure loss. When the average pore size of the small pore exceeds 40 µm, the material to be caught easily passes and the filtering efficiency lowers and there is feared that the function as a filtering structural body is not developed.

According to the present teaching, average pore size of the large pore is to the above range adjusted. Thus, the reduction of the pressure loss and the high filtering efficiency can be surely attained. When the average pore size of the large pore is less than 30 µm, the effective filtering area can not be sufficiently increased and the clogging is easy to be prematurely caused. As a result, the reduction of the pressure loss can not be sufficiently attained. While when the average pore size of the large pore exceeds 80 µm, the mechanical strength of the sintered body is lowered by the increase of the porosity but also there is feared that the sintered body may not be established as the filtering structural body.

According to the present teaching, silicon carbide is used as a porous ceramic. Because, there can be utilized the porous sintered body having excellent mechanical strength, heat resistance, chemical stability and the like inherent to silicon carbide. Particularly, silicon carbide being less in the impurity content is effective because the ratio of silicon carbide in the sintered body rises and the excellent mechanical strength, heat resistance, chemical stability and the like inherent to silicon carbide are hardly damaged.

Further, the characteristic of the ceramic sintered body according to the present teaching lies in the simultaneous attainment of two properties, i.e. the reduction of pressure loss and the high filtering efficiency.. In order to give this characteristic to the sintered body, the present teaching adopts a method wherein a pore forming material is previously added prior to the firing of a green shaped body and thereafter the firing is conducted. Particularly, the characteristic of the production method lies in that the pore forming material is disappeared by heating after the firing at a stage before the ceramic arrives at the sintering temperature and air gaps (large pores) are produced in places existing the pore forming material. According to this production method, the large pores having desired size and shape can be formed relatively simply and surely in the sintered body. Moreover, the pore forming material is disappeared and hardly remains in the structure of the sintered body. Therefore, the deterioration of the properties of the sintered body due to the incorporation of the impurity can be prevented from occurring.

As the pore forming material are used organic synthetic resins having a low melting point, metallic materials and the like. For example, when the particles made of the synthetic resin are used as the pore forming material, the pore forming material surely disappears through heat at a relatively initial stage before the temperature arrives at the sintering temperature of the ceramic. Further, the synthetic resin has a relatively simple molecular structure, so that a possibility of producing a complicated compound through the heating is small, and there is a characteristic that the impurity resulting in the deterioration of the properties in the sintered body hardly remains in the sintered body. Also, the synthetic resin is a relatively cheap material, so that even if it is used, the production cost of the sintered body is not raised.

Furthermore, the pore forming material is used to have an average particle size of 30-80 µm. The materials having such particle size are effective in the production of the porous ceramic sintered body having a low pressure loss and a high filtering efficiency. When the average particle size of the pore forming material is less than 30 µm, the average pore size of the large pore obtained through the firing is too small and the filtering area is not sufficiently increased and the clogging is easily caused prematurely. As a result, it is difficult to produce the sintered body having a low pressure loss. On the other hand, when the average particle size of the pore forming material exceeds 80 µm, the average pore size of the large pore obtained through the firing is too large. This brings about the increase of the porosity and it is difficult to produce the sintered body having a high filtering efficiency. Further, the mechanical strength of the sintered body lowers, but also there is feared that the sintered body may not be established as the filtering structural body.

In the porous ceramic sintered body according to the present teaching by adjusting the sizes of the large pore and the small pore opened or exposed to the surface of the sintered body is carried a large amount of NOx occlusion catalyst on not only the surface of the filter but also the inside thereof, whereby it can be attempted to increase the adsorption amount of NOx in DPF formed by using the above ceramic sintered body. Therefore, the purification action occurs not only on the surface of the filter but also in the inside of the filter based on the large pores, so that the site of reaction (combustion) increases. As a result, even if the thermal conductivity of the material is low, the reaction of the whole filter can be promoted. Thus, a time of rendering the engine into a rich state can be decreased, which brings about the improvement of fuel consumption.

Hereinafter, the present invention is illustrated and explained by means of preferred embodiments in conjunction with the accompanying drawings, wherein:
FIG. 1 is an outline view of a whole of an apparatus for the purification of exhaust gas embodying the present teaching.
FIG. 2 is an end face view of a ceramic filter assembly of the above embodiment.
FIG; 3 is an enlarged section view of a main part of the apparatus for the purification of exhaust gas.
FIGS. 4(a) - (c) are enlarged section views of a main body in a shaped body and a sintered body of the embodiment of the present teaching, respectively, and (d) is an enlarged concept view of a sintered body through the conventional technique.
FIG. 5 is a schematically section view showing (a) a conventional ceramic carrier and (b) a ceramic carrier of the present teaching.

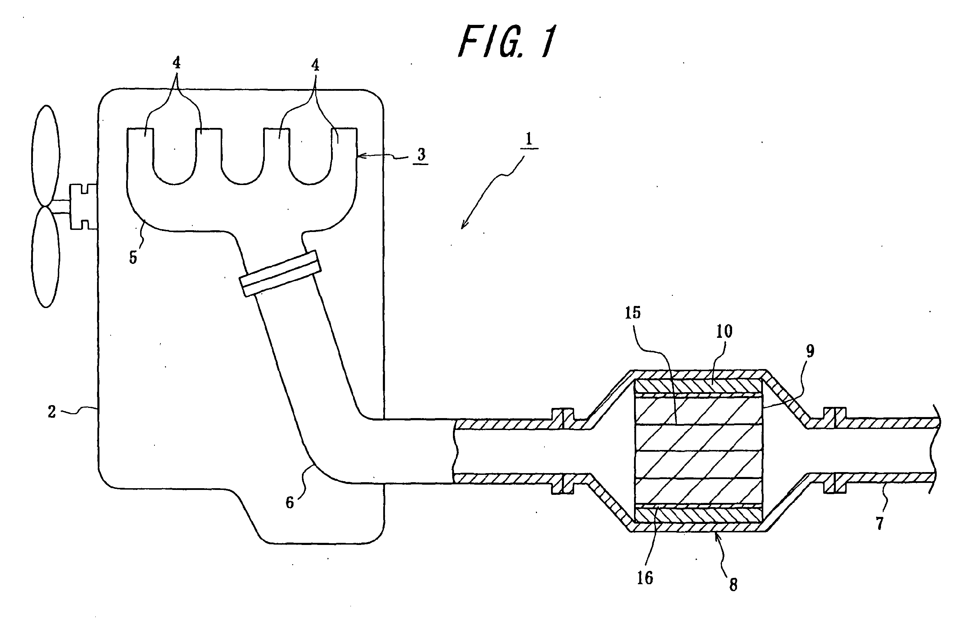

An embodiment of applying DPF formed by using a ceramic sintered body according to the present teaching to an apparatus for purifying an exhaust gas of a diesel engine is explained in detail with reference to FIGS. 1-5.

As shown in FIG. 1, the apparatus 1 for the purification of the exhaust gas is an apparatus for purifying the exhaust gas inclusive of particulates discharged from a diesel engine 2 as an internal combustion engine. The diesel engine 2 comprises plural cylinders not shown. To each cylinder is connected a bifurcation 4 of an exhaust manifold 3 made of a metallic material. Each of the bifurcations 4 is connected to a main manifold body 5. Therefore, the exhaust gas discharged from the each cylinder is collected to one place.

A first exhaust pipe 6 and a second exhaust pipe 7, each made of a metallic material, are arranged at a downstream side of the exhaust manifold 3. An upstream side end of the first exhaust pipe 6 is connected to the main manifold body 5. A cylindrical casing 8 made of the same metallic material is arranged between the first exhaust pipe 6 and the second exhaust pipe 7. An upstream side end of the casing 8 is connected to the downstream side end of the first exhaust pipe 6, and a downstream side end of the casing 8 is connected to the upstream side end of the second exhaust pipe 7. Also, the interiors of the first exhaust pipe 6, the casing 8 and the second exhaust pipe 7 are communicated with each other so as to flow the exhaust gas therethrough.

As shown in FIG. 1, the casing 8 is formed so that a size of a central part is made larger than those of the exhaust pipes 6, 7. Therefore, the interior of the casing 8 is made wider than the interiors of the exhaust pipes 6, 7. In the casing 8 is received a ceramic filter 9 for catching diesel particulates (i.e. DPF).

It is preferable to arrange a heat insulating material 10 between the outer peripheral face of the ceramic filter 9 and the inner peripheral face of the casing 8. The heat insulating material 10 is a matted material including ceramic fibers therein and has a thickness of a few mm to dozens of mm. The reason for such a structure is due to the fact that the escape of heat from the outermost peripheral part of the ceramic filter 9 is prevented to suppress energy loss in the reproduction to a minimum. Also, it is effective to prevent the position shifting of the ceramic filter 9 produced by a pressure of the exhaust gas, vibrations in the running or the like.

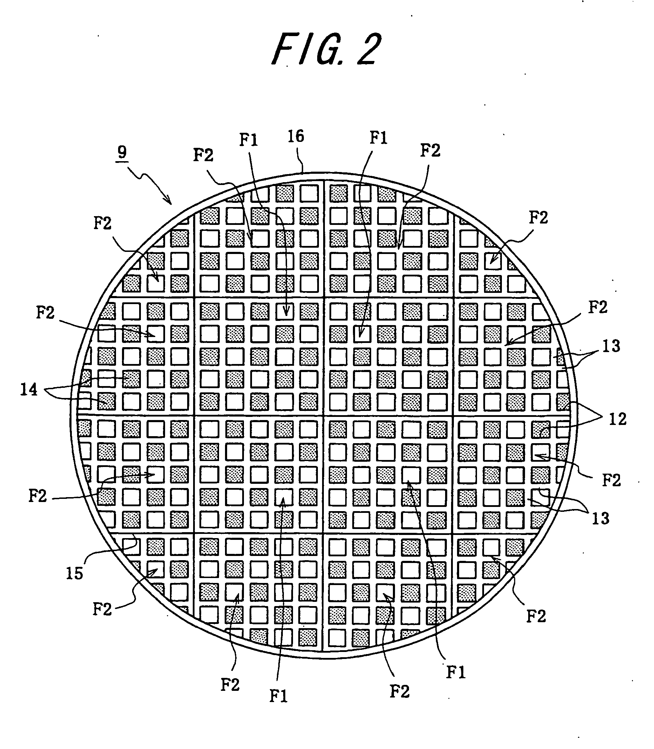

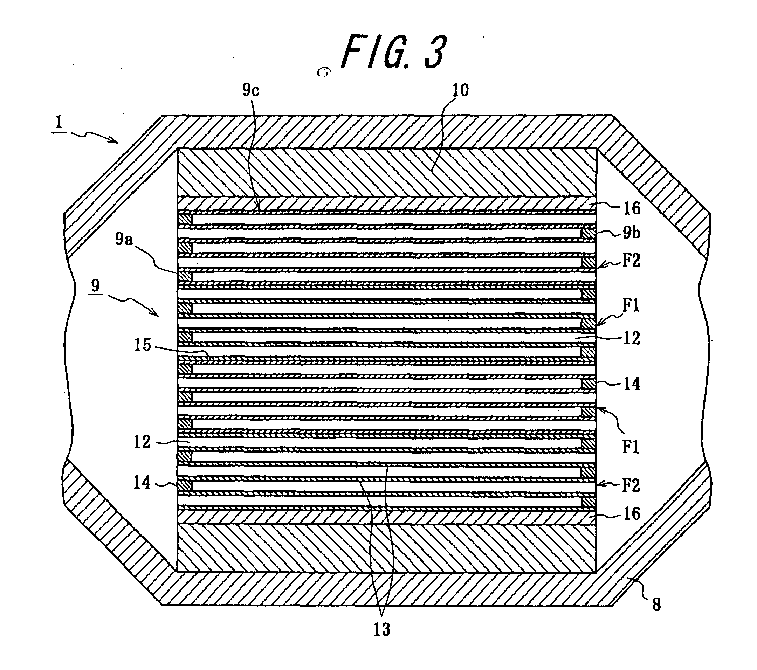

The ceramic filter 9 constructed by using the above porous ceramic sintered body as a catalyst carrier and carrying a desired catalyst thereon is used as a DPF for removing the above PM. As shown in FIGS. 2 and 3, the ceramic filter 9 for the removal of PM is constructed integrally bundling and uniting a plurality of smaller-size filters F1, F2 each having a honeycomb structure to form an aggregate. A great mass of the filters F1 located in a central portion of this aggregate are square poles, and an outer profile size is, for example, 34 mm x 34 mm x 150 mm. Around the square pole filters F1 located in the central portion are arranged a plurality of the filters F2 having a shape other than square poly (polygonal pole shape such as triangular poly or the like), whereby a column-shaped ceramic filter 9 (diameter of about 135 mm) is constructed as a whole.

Each of the filters F1, F2 is constructed with a ceramic sintered body made of silicon carbide For example, a filter 20 made of porous silicon carbide sintered body has an advantage that the heat resistance and heat conductivity are particularly excellent as compared with those of the other engineering ceramics.

The filters F1, F2 shown in FIGS. 2 and 3 have so-called honeycomb structures. Because, the honeycomb structure has a merit that the pressure loss is small even if the amount of fine particles caught increases. In each of the filter F1, F2, a great number of through-holes 12 having substantially a square form at section are regularly formed along a direction of an axial line. The through-holes 12 are partitioned with each other through thin cell walls 13. An opening part of each through-hole 12 is sealed at either end face 9a, 9b with a sealing body 14 (in this case, porous sintered silicon carbide). Therefore, the end faces 9a, 9b are opened in a checkered pattern as a whole. As a result, many cells having a square form at section are formed in the filters F1. In this case, the cell density is set to about 200 cells/inch, and the thickness of the cell wall 13 is set to about 0.3 mm, and the cell pitch is set to about 1.8 mm. Among many cells, upstream side end faces 9a are opened at about a half, and downstream side end faces 9b are opened at the remaining half.

DPF is prepared by using the porous silicon carbide sintered body having communicated pores comprising the large pores and the small pores as a catalyst carrier and carrying a catalyst on a surface thereof. In the DPF according to the invention, it is possible to carry the various catalysts not only on the outer surface of the cell wall but also in the inside of the cell wall or inner surface of the large pore, so that the occlusion reduction of NOx and combustion of PM are efficiently promoted at the surface and the inside of the cell wall. For this end, PM can be burnt so as not to leave unburnt portion even in the sintered body having a low thermal conductivity. Therefore, it is naturally preferable to use silicon carbide as a ceramic having a high thermal conductivity.

Sixteen filters F1, F2 in total shown in FIG. 2 are adhered to each other on their outer surfaces through a first adhesion layer 15 consisting essentially of an adhesion seal material using the following ceramic. Also, a second adhesion layer 16 made of an adhesion sheet consisting essentially of the following ceramic is formed on an outer peripheral face 9c of a filter 9 consisting of the filters F1, F2 and a column-shaped diesel particulate aggregate for binding them.

In the composition of the adhesive in the first adhesion layer 15 and the second adhesion layer 16 are contained an inorganic fiber, an inorganic binder, an organic binder and inorganic particles. As the inorganic fiber is used at least one ceramic fiber selected from silica-alumina fiber, mullite fiber, alumina fiber and silica fiber or the like. As the inorganic binder is used at least one colloidal sol selected from silica sol and alumina sol. As the organic binder, a hydrophilic organic polymer is preferable, and at least one polysaccharide selected from polyvinyl alcohol, methyl cellulose, methyl cellulose and carboxymethyl cellulose is used. As the inorganic particle is used at least one inorganic powder selected from silicon carbide, silicon nitride and boron nitride or an elastic material using whisker.

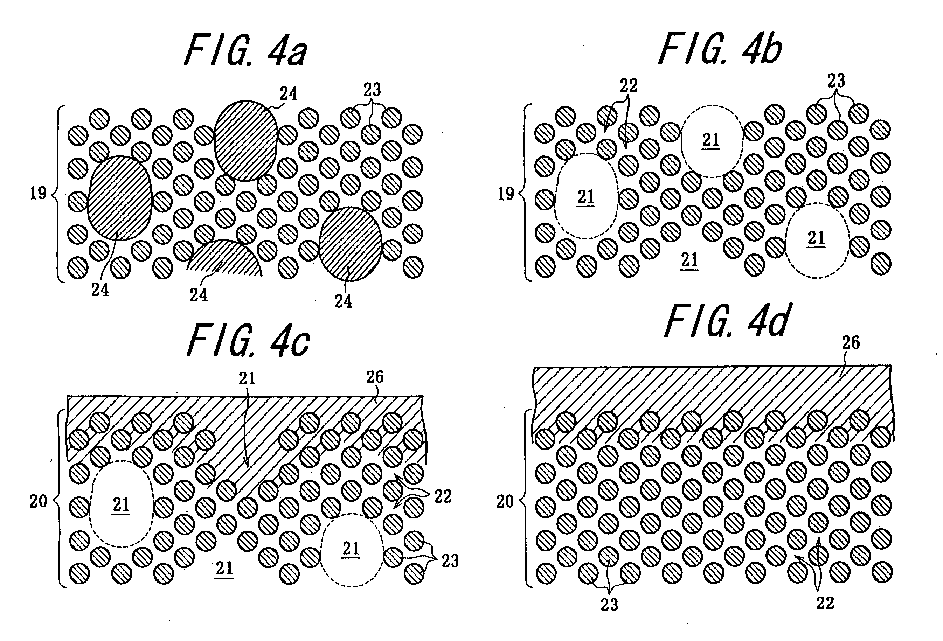

As schematically shown in FIG. 4, the porous silicon carbide sintered body 20 in the embodiment of the present teaching has communicated pores comprising large pores 21 and small pores 22 arriving to the inside thereof. That is, the pores in the porous silicon carbide sintered body (large pores, small pores) are not independent individually but are communicated with each other.

The communicated pores are comprised of the aforementioned two kinds of pores (i.e. large pore 21 and small pore 22) in which the small pores 22 are relatively small in the size as compared with the large pores 21 and are uniformly dispersed in the surface layer and the inside of the sintered body 20.

The average pore size of the small pore 22 is to be about 5 µm - 40 µm, more preferably about 15 µm - 35 µm. It is further preferable to be about 20 µm - 30 µm.

When the average pore size of the small pore is less than 5 µm, it is easy to prematurely clog the small pores 22 with a small amount of PM and there is a fear of increasing the pressure loss in a short time. While, when the average pore size of the small pore 22 exceeds 40 µm, PM easily passes through the communicated pores and hence the filtering efficiency lowers and there is a fear that it does not act as a structural body of the filter.

On the other hand, the large pores 21 are relatively large in the size as compared with the small pores 22 and are dispersed in both the surface layer portion and the inside of the sintered body 20. The average pore size of the large pore 21 is preferable to be 1.5 times or more the average pore size of the small pore 22, more preferably 2.0 times - 10 times, and particularly about 2.0 times - 6.0 times.

The average pore size of the large pore 21 is to be 30 µm - 80 µm, more preferably 40 µm - 65 µm, most preferably 50 µm - 60 µm. As to the reason on the limitation of the pore size, when the average pore size of the large pore 21 is less than 30 µm, the filtering area can not be sufficiently ensured and the clogging is prematurely and easily caused and the reduction of the pressure loss can not sufficiently be obtained. While, when the average pore size of the large pore 21 exceeds 80 µm, the mechanical strength of the sintered body 20 is decreased by the increase of the porosity but also there is a fear that it is not established as a structural body for the filter. That is, plural large pores 21 are connected to each other to produce largely continuous communicated pores passing through the cell wall 13 and hence PM freely passes through the cell wall 13. In order to prevent such a state, it is preferable that the value of the average pore size of the large pore 21 is set to be not more than

1/2 of the thickness of the cell wall 13.

The ratio of the large pores in the porous silicon carbide sintered body 20 is about 5% - 15% as a volume ratio. More preferably, it is about 7% - 13%. When the ratio is less than 5%, the number of the large pores 21 is too small and it can not be attempted to increase the effective filtering area in the sintered body 20. While, when the ratio of the large pores occupied in the sintered body 20 exceeds 15%, the mechanical strength of the sintered body 20 lowers due to the increase of the porosity. Moreover, the occupying ratio of the large pores 21 can be calculated based on the total volume of a pore forming material 24 as mentioned later and the volume of the sintered body 20 (volume of substrate itself other than cells). That is, the total volume of the pore forming material 24 can be calculated, for example, by dividing the addition amount of the pore forming material 24 by a density thereof, and the calculated value is approximately equal to the total volume of the large pores 21. A percentage of a value obtained by dividing the thus calculated total volume of the large pores 21 by the volume of the sintered body 20 corresponds to the occupying ratio of the large pores 21.

Here, the number of large pores 21 exposed or opened to the surface of the sintered body 20 per unit area is to be 10 pores/mm² - 100 pores/mm², more preferably 20 pores/mm² - 70 pores/mm².

When the number of large pores 21 exposed or opened to the surface of the sintered body 20 is less than 10 pores/mm², the increase of the effective filtering area in the sintered body 20 can not sufficiently be obtained. While, when this number exceeds 100 pores/mm², the mechanical strength of the sintered body 20 lowers due to the increase of the porosity but also there is a fear that the sintered body is not established as a structural body for filter.

As to the measurement of the area ratio, an optional region of 1 mm square is first set in a photograph of the sintered body surface pictured by means of a microscope and the number of large pores 21 existing in this region (exposed and opened to the sintered body surface) is counted. This procedure is carried out on plural regions and it is desired to calculate an average value.

A ratio of silicon carbide in the porous silicon carbide sintered body 20 (weight ratio of silicon carbide occupied in constitutional components of the sintered body 20) is preferable to be not less than 60% by weight, more preferably not less than 80% by weight, particularly not less than 95% by weight. As the silicon carbide ratio becomes higher, there is obtained porous sintered body surely possessing excellent mechanical strength, heat resistance, chemical stability and the like inherent to silicon carbide. On the other hand when the silicon carbide ratio is less than 60% by weight, the properties of the sintered body 20 lower and there is a fear that it is not suitable as a structural body for the filter.

In the porous silicon carbide sintered body 20, it is preferable that the content of impurity other than elemental silicon (Si) and elemental carbon (C) is less than 2%, particularly less than 1%. As the content of the impurity is too small, the silicon carbide ratio increases and the excellent properties inherent to silicon carbide are hardly damaged. The term "impurity" used herein means metals exemplified by iron (Fe), aluminum (Al), copper (Cu) and sodium (Na) and compounds thereof. The reason why elementary silicon and elementary carbon are not taken as the impurity is due to the fact that they are elements constituting silicon carbide and do not cause critical factor lowering the properties of the sintered body 20 even if they are contained in silicon carbide.

As the silicon carbide particle 23 constituting the porous silicon carbide sintered body 20, it is preferable to use particles having an average particle size of 5 µm - 30 µm, preferably about 8 µm - 15 µm. When the average particle size of the silicon carbide particle is too small, the small pores 22 formed in the matrix portion of the sintered body become smaller and hence soot hardly passes through the communicated pores and the clogging easily occurs prematurely. While, when the average particle size of the silicon carbide particle is too large, the small pores 22 formed in the matrix portion become large and soot easily passes through the communicated pores and hence the filtering efficiency lowers.

As the silicon carbide used according to the present teaching, it is used a mixed particle of SiC consisting of small-size particles having an average particle size of 0.5-5 µm and large-size particles having 10-30 µm. By using such a mixed particle is made possibly the formation of the small pores.

Further, the silicon carbide particles 23 may be directly joined to each other by neck of silicon carbide itself (network structure) without silicon layer. Such a structure provides an excellent mechanical strength though the body is a porous body.

The production method of the silicon carbide sintered body (ceramic carrier) as an embodiment of the present teaching will be described below.

### ① Preparation step;

There are first provided a slurry of starting ceramic used in an extrusion shaping step, a sealing paste used in a sealing step for an end face of a filter, a paste for the formation of a first layer used in a filter adhering step, a paste for the formation of a second layer used in an irregularity disappearing step, and the like.

The sealing paste is used by compounding silicon carbide powder with an organic binder, a lubricant, a plasticizer and water and milling them. The paste for the formation of the first adhesion layer 15 is used by compounding given amounts of inorganic fibers, an inorganic binder, an organic binder, inorganic particles and water and then milling them. The paste for the formation of the second adhesion layer 16 is used by compounding given amounts of inorganic fibers, an inorganic binder, an organic binder, inorganic particles and water and then milling them. Moreover, the inorganic particles can be omitted in the paste for the formation of the second adhesion layer 16 as mentioned above.

The slurry of the starting ceramic is used by compounding the starting material consisting essentially of silicon carbide powder with given amounts of an organic binder, water and the like and then milling them to form a slurry.

In the preparation of the slurry of the starting ceramic, it is important to compound a pore forming material 24 with the slurry and uniformly disperse thereinto. As the pore forming material 24 is used a substance disappearing by heat at a stage before the arrival at a sintering temperature of silicon carbide (about 2200°C). In this case, the disappear by heat means that it is substantially disappeared from the sintered shaped body by sublimation, evaporation, decomposition, reaction sintering or the like through the heating in the sintering. The disappearing temperature is desirable to be lower, preferably not higher than 1000°C, more particularly not higher than 500°C. As the disappearing temperature becomes lower, the probability of leaving the impurity in the sintered body 20 becomes small, which can contribute to the increase of the silicon carbide ratio.

Moreover, the pore forming material 24 is desirable to be a kind not causing the foaming in the disappearance. In case of the pore forming material 24 causing the foaming, it is difficult to form large pores 21 having uniform shape and size, which fears an influence upon the quality of the sintered body 20.

As a preferable embodiment of the pore forming material 24, there are particles made of synthetic resin and the like. Besides, particles of an organic polymer such as starch or the like, metal particles, ceramic particles and the like can be used. Preferably, spherical particles made of the synthetic resin are used as the pore forming material 24. Moreover, the particle form of the pore forming material is not limited to the spherical form, and may be an elongated spherical form, a cubic form, an amorphous lump form, columnar form, a plate form and the like. The pore forming material 24 has an average particle size of 30 µm - 80 µm. By setting the average particle size of the pore forming material 24 to the above preferable range can be surely produced the porous silicon carbide sintered body 20 having a small pressure loss and a high filtering efficiency. Further, the pore forming material is preferable to have the average particle size being not more than about 1/2 of a cell wall of the sintered body. Such an average particle size can prevent the formation of the communicated pores consisting of only the large pores.

The pore forming material 24 is preferable to be compounded in the starting slurry in an amount of about 5% by weight to 25% by weight. Also, the concentration of impurities included in the pore forming material 24 (excludes elemental Si and elemental C) is preferable to be not more than 3% by weight, more preferably not more than 1% by weight. When the concentration of the impurity in the pore forming material 24 is low, the probability of leaving the impurity in the sintered body 20 becomes small, which contributes to the improvement of the silicon carbide ratio.

### ② Extrusion shaping step;

The aforementioned ceramic starting slurry is charged into an extrusion shaping machine and continuously extruded through a mold. In this case, the shaping pressure is preferable to be set to 20 kgf/cm² - 60 kgf/cm². Thereafter, the thus extrusion shaped honeycomb shaped body is cut into equal lengths to obtain cut pieces of a square pole honeycomb shaped body. Further, a given amount of the sealing paste is filled in either side opened portions of cells of the cut piece in a checkered pattern to seal both end faces of the cut piece.

### ③ Firing step;

The cut pieces of the honeycomb shaped body is dried and subjected to a degreasing treatment at a temperature of 300°C - 800°C, preferably 500°C - 600°C to remove the binder in the shaped body 19. In this degreasing treatment step, the pore forming material 24 of synthetic resin particles included in the shaped body disappears through heat and hence large pores 21 are formed in places existing the pore forming material 24 (see FIGS.4(a), (b)). The thus formed large pores 21 fundamentally correspond to approximately the form and size of the pore forming material 24.

Subsequently, the temperature is raised to conduct the firing, whereby the cut piece 19 of the honeycomb shaped body and the sealing body 14 are completely sintered. Thus, there are obtained filters F1 made of a square pole porous silicon carbide sintered body 20 (all of them are square pole at this time).

Moreover, the temperature of the firing is preferable to be 2150°C - 2300°C. When the firing temperature is lower than 2150°C, the temperature is too low and the sintering reaction does not proceed and hence the improvement of the mechanical strength is hardly attained. While, when the firing temperature is higher than 2300°C, the sintering excessively proceeds during the firing and there is a fear that the sintered body 20 is densified. As a result, suitable poring property can not be given to the porous silicon carbide sintered body 20. The firing time is set to 0.1 hour - 5 hours, and the furnace atmosphere in the firing is set to an inert atmosphere and an atmospheric pressure.

### ④ Assembling step;

If necessary, after a ceramic adhesion seal is applied to an outer peripheral face of the filter F1, the paste of the formation of the first adhesion layer is applied thereonto. 16 of such filters F1 are integrally united with each other by adhering the outer peripheral faces. At this time, the filter adhered structure as a whole is a square form at section.

### ⑤ Outer profile cutting step;

In this step, the filter adhered structure of the square form at section obtained through the filter adhering step is polished to remove unnecessary parts from the outer peripheral portion to thereby adjust the outer profile. As a result, there is obtained an adhered structure of F1 and F2 having a disc form at section. Moreover, cell walls 13 are partly exposed at the newly exposed face by the outer profile cutting and hence irregularity is developed on the outer peripheral face.

### ⑥ Shaping step;

This step is a step for removing the irregular face produced in the above outer profile cutting step, in which the paste for the formation of the second adhesion layer is uniformly applied onto the outer peripheral face of the filter adhered structure to form a second layer 16. As a result, a desired disc-shaped ceramic filter can be completed.

The method of forming a catalyst coat layer 28 on the surface of the above ceramic filter 9 will be described below.

The catalyst coat layer 28 is individually formed to each surface of the ceramic particles in the catalyst carrier made of the ceramic sintered body. The catalyst coat layer 28 is preferable to further contain an oxidation catalyst of a noble metal as an active component, titania, zirconia, as a co-catalyst, a NOx occulding catalyst of an alkali metal and/or an alkaline earth metal and the like. Then, each step (formation of catalyst coat layer, carrying of active component) is described when using alumina as a catalyst coat layer, cerium as a co-catalyst, platinum as an active component, potassium as a NOx occulding catalyst and the like.

### (1) Coating formation of catalyst coat layer onto ceramic (silicon carbide) carrier

### a. Solution impregnation step

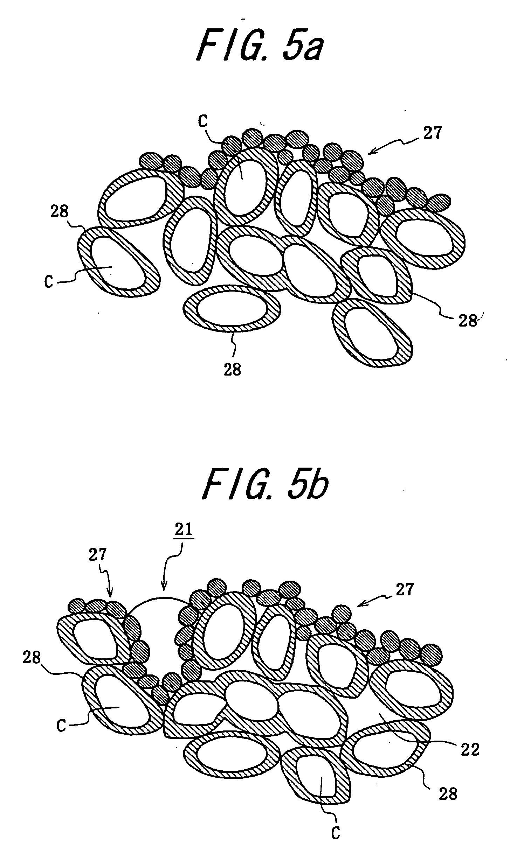

This step is a treatment for forming a rare earth oxide-containing alumina coat layer 28 on each surface of the ceramic particles by impregnating a solution of a metal compound containing aluminum and a rare earth element, e.g. a mixed aqueous solution of aluminum nitrate and cerium nitrate or the like in each surface of ceramic particles c constituting the cell wall of the ceramic filter 9 through sol-gel process (see FIG. 5).

As to the aluminum-containing solution in the above mixed aqueous solution, there are a metal inorganic compound and a metal organic compound as a starting metal compound. As the metal inorganic compound are used Al(NO₃)₃, AlCl₃ , AlOCl, AlPO₄, Al₂(SO₄)₃, Al₂O₃, Al(OH)₃, Al and the like. Among them, Al(NO₃)₃ or AlC1₃ is preferable because it is easily dissolved in a solvent such as alcohol, water or the like and is easy in the handling. As the metal organic compound are mentioned a metal alkoxide, a metal acetylacetonate, a metal carboxylate and the like. Concretely, there are Al (OCH₃)₃, Al (OC₂)H₃)₃, Al (iso-OC₃H₇)₃ and the like.

On the other hand, as to the cerium-containing compound solution in the mixed aqueous solution, there are used Ce (NO₃)₃, CeCl₃, Ce₂(SO₄)₃, Ce (OH)₃, Ce₂(CO₃)₃ and the like.

As a solvent for the mixed solution is used at least one of water, alcohol, diol, polyvalent alcohol, ethylene glycol, ethylene oxide, triethanolamine, xylene and the like considering the dissolution of the above metal compound. Also, hydrochloric acid, sulfuric acid, nitric acid, acetic acid or hydrofluoric acid may be added as a catalyst in the preparation of the above solution. Furthermore, in order to improve the heat resistance of the alumina coat layer, elementary K, Ca, Sr, Ba, La, Pr, Nd, Si, Zr or a compound thereof may be added to the starting material in addition to the rare earth oxide.

According to the present teaching, Al(NO₃)₃ and Ce (NO₃)₃ may be mentioned as a preferable embodiment of the metal compound-because they are dissolved in the solvent at a relatively low temperature and is easy in the preparation of the starting solution. As a preferable solvent, 1,3-butane diol is recommended. A first reason of the recommendation is due to the fact that the viscosity is proper and a gel film having a proper thickness may be formed on SiC particle of a gel state. A second reason is that this solvent forms a metal alkoxide in the solution and is liable to easily form a metal oxide polymer having oxygen-metal-oxygen bond, i.e. a precursor of a metal oxide gel.

The amount of Al(NO₃)₃ is desirable to be 10-50 mass%. When it is less than 10 mass%, there can not be carried an alumina amount having a surface area for maintaining the activity of the catalyst over a long time, while when it exceeds 50 mass%, the heat generation quantity becomes larger in the dissolution and the gelation is caused. Also, the amount of Ce(NO₃)₃ is preferable to be 1- 30 mass%. When the amount is less than 1 mass%, the oxidation can not be caused, while when it exceeds 30 mass%, the grain growth of CeO₂ occurs after the firing. On the other hand, the compounding ratio of Al(NO₃)₃ to Ce(NO₃)₃ is preferable to be about 10:2. Because, the dispersion degree of the CeO₂ particles after the firing can be improved by making rich Al(NO₃)₃.

In the preparation of the impregnated solution of the above metal compounds, the temperature is desirable to be 50-130°C. When the temperature is lower than 50°C, the solubility of the medium is low, while when it exceeds 130°C, the reaction violently proceeds and the gelation occurs and hence the solution can not be used as an application solution. The stirring time is desirable to be 1-9 hours. Because, the stability of the solution is stable within this range.

As to the above cerium-containing metal compounds of Al(NO₃)₃ and Ce(NO₃)₃, in order to produce a composite oxide or solid solution with zirconium in addition to the above example, it is preferable that Zr(NO₃)₂ or ZrO₂ is used as a zirconium source and dissolved in water or ethylene glycol to form a mixed solution, and they are impregnated into the mixed solution and dried and fired to obtain the composite oxide.

According to the present teaching, it is important that the above adjusted solution of the metal compounds is inserted into all pores as a space between the ceramic (SiC) particles in the cell wall. For this end, it is preferable to adopt, for example, a method wherein the catalyst carrier (filter) is placed in a vessel and filled with the above metal compound solution to conduct deaeration, a method wherein the solution is flown into the filter from one end thereof and deaeration is carried out at the other end, and the like. In this case, a vacuum pump in addition to an aspirator may be used as an apparatus for deaeration. When using such an apparatus, air in the pores of the cell wall can be removed off and hence the solution of the above metal compounds can be uniformly applied onto the surface of each ceramic particle.

### b. Drying step

This step is a treatment in which volatile components such as NO₂ and the like are removed by evaporation and the solution is rendered into a gel to fix onto the ceramic particle surface and remove an extra solution. The heating is carried out at 120-170°C for about 2 hours. When the heating temperature is lower than 120°C, the volatile components hardly evaporate, while when it exceeds 170°C, the thickness of the gelated film becomes non-uniform.

### c. Firing step

This step is a preliminary calcination treatment in which the residual components are removed to form an amorphous alumina film, and the heating at 300-1000°C for 5-20 hours is desirable. When the calcination temperature is lower than 300°C, it is difficult to remove residual organic matters, while when it exceeds 1000°C, Al₂O₃ is not amorphous but is crystallized and the surface area tends to lower.

### (2) Carrying of active component

### a. Solution preparation step

On the surface of the silicon carbide (SiC) ceramic carrier (filter) is formed a rare earth oxide-containing alumina coat layer, and platinum as an active component and potassium as a NOx occluding catalyst are carried on the surface of the alumina coat layer, respectively. In this case, a noble metal such as Pd, Ph or the like other than Pt may be included as the active component. These noble metals serve to generate NO₂ by reacting with NO and O₂ in the exhaust gas prior to the occlusion of NOx through the alkali metal or the alkaline earth metal, or to defuse NOx by reacting with combustible components in the exhaust gas when the NOx occluded is discharged. Also, the kind of the alkali metal and/or alkaline earth metal included in the catalyst layer as NOx occluding component is not particularly limited. As the alkali metal are mentioned Li, Na, K, Cs and as the alkaline earth metal are mentioned Ca, Ba, Sr and the like. When the alkali metal having a high reactivity with Si, particularly K is used as the NOx occluding component among them, the invention is most effective.

In this case, the amount of the active component carried is determined so that an aqueous solution containing Pt, K and the like is added dropwise and impregnated only by a water absorbing amount of the carrier to render into a slight wetted state of the surface. For example, the water absorbing amount kept by the SiC ceramic carrier means that when the measured value on the water absorbing amount of the dried carrier is 22.46 mass%, if the carrier has a mass of 110 g and a volume of 0.163 1, the carrier absorbs 151.6 g/l of water.

As a starting substance of Pt is used, for example, a solution of dinitrodiamine platinum nitrate ([Pt (NH₃)**₂**(NO₂)₂] HNO₃, Pt concentration: 4.53 mass%), while as a starting material of K is used, for example, an aqueous solution of potassium nitrate (KNO₃) mixed with the above platinum nitrate solution.

In order to carry a given amount 1.7 g/l of Pt, 1.7 (g/l)*0.163 (1) = 0.272 g of Pt is carried on the carrier, while in order to carry 0.2 mol/l of K, 0.2 (mol/l)*0.163 (1) = 0.0326 mol of K is carried on the carrier, so that the solution of dinitrodiamine platinum nitrate solution (Pt concentration: 4.53%) is diluted with KNO₃ and distilled water. That is, a weight ratio X (%) of dinitrodiamine platinum nitrate solution (Pt concentration: 4.53%)/(KNO₃ and distilled water) is calculated by X = 0.272 (Pt amount)/24.7 (water content g)/4.53 (Pt concentration mass%) and is 24.8 mass%.

In this case, however, the nitric acid solution (KNO₃ concentration: 99%) is diluted with distilled water so as to render KNO₃ into 0.0326 mol.

### b. Liquid impregnation step

The given amount of the thus adjusted aqueous solution of dinitrodiamine platinum nitrate is added dropwise onto both end faces of the carrier with a pipette at constant intervals. For example, 40-80 droplets are added to one-side face at constant intervals, whereby Pt is uniformly dispersed and fixed onto the surface of the alumina carried film covering the SiC ceramic carrier.

### c. Drying-firing step

After the dropwise addition of the aqueous solution, the carrier is dried at 110°C for about 2 hours to remove water and transferred into a desiccator and left to stand for 1 hour to measure an adhesion amount by an electron scale or the like. Then, the firing is carried out in N₂ atmosphere under conditions of about 500°C-about 1 hour to fix Pt and K.

The method of catching PM with a filter 9 by using the above-obtained ceramic filter (made of silicon carbide) 9 is explained below.

To the ceramic filter 9 received in a casing 8 is fed an exhaust gas from a side of an upstream end face 9a. The exhaust gas fed through a first exhaust pipe 6 is first flown into cells having opened upstream end faces 9a and then passed through cell walls 13 to move over an inside of cells adjacent to the above cells or cells having opened downstream end faces 9b and thereafter flown out from the downstream end faces 9b of the filter F1 through the openings of these cells toward a second exhaust pipe 7. However, PM included in the exhaust gas can not pass through the cell walls 13 and traps therein. As a result, the purified exhaust gas is discharged from the downstream end faces of the filters F1, F2. The thus purified exhaust gas is further passed through the second exhaust pipe 7 and finally discharged into air. At a time of storing a certain amount of PM, the ceramic heater 9 is heated by switching on a heater not shown to burn and remove PM. As a result, the ceramic filter 9 is reproduced and turned to a state capable of catching PM.

Now, the following four features are mentioned as a factor producing the pressure loss in DPF.
1) pressure loss produced when the gas is flown into the upstream end faces 9a;
2) pressure loss produced when the gas passes through the cells;
3) pressure loss produced when the gas passes through the cell walls 13; and
4) pressure loss produced when the gas passes through the deposited PM layer 26.

As to the factors 1 to 3, the change is not fundamentally caused even if the use time becomes long. On the other hand, the PM layer 26 relating to the factor 4 becomes gradually thicker as the use time becomes long. Since PM is very fine particles, the resistance in the pass of the gas through the PM layer 26 is considerably large and hence the pressure loss becomes large as the deposited amount (caught amount) of PM becomes larger. That is, the reason why the pressure loss gradually increases can be said due to the fact that the thickness of the PM layer 26 increases. Therefore, it is effective to mitigate the increase of the pressure loss when the increase of the thickness of the PM layer 26 is prevented by any method.

In this connection, since the large pores 21 are existent in the surface layer portion and the inside of the sintered body in the DPF of the above embodiment, a part of PM, which would be naturally deposited on the surface of the sintered body, is deposited on the inner faces of the large pores 21 (see FIG. 4(c)). Therefore, even when it is used for the same time (i.e. the same amount of PM is deposited), the thickness of the PM layer 26 hardly increases as compared with the conventional case shown in FIG. 4(d). As a result, the communicated pores hardly clog in the deposition of PM and hence the control of the pressure loss is attained. That is, the DPF according to the present teaching is small in the pressure loss during the deposition of PM as compared with the DPF made of the sintered body simply existing only the small pores 22. Also, the DPF according to the present teaching is superior in the catching ability of PM to the DPF made of the sintered body existing only the large pores 21.

Next, the action when the catalyst, particularly NOx occluding reduction catalyst is carried on the above ceramic filter 9 will be described.

The ceramic filter 9 according to the present teaching is preferably used in the application as a filter for the purification of exhaust gas in diesel engine (DPF), and particularly there is used DPF wherein the honeycomb is alternately clogged in a checkered pattern. This DPF itself has only a function that particulates (floating particle matter: PM) are caught by filtering walls (cell walls) as a catalyst carrier. However, when a catalyst coat layer 28 is formed by carrying a catalyst active component on the cell wall of the DPF, particularly on surfaces of ceramic particles as a constitutional component thereof, hydrocarbon and carbon monoxide in the exhaust gas can be oxidized. Especially, when NOx selective reduction type catalyst component capable of reducing NOx or occlusion type catalyst component is carried on the surface of the ceramic filter 9 in an oxidizing atmosphere of the diesel exhaust gas, the reduction of NOx is possible. Moreover, since the PM caught in the DPF brings about the increase of the pressure loss in the DPF with the proceed of the deposition, it is usually required to reproduce it by combustion treatment or the like. A temperature starting the combustion of soot 26 (carbon) as a main component of PM usually included in the diesel exhaust gas is about 550-630°C. In this point, when the above catalyst active component is carried in the DPF, the combustion reaction path of the soot changes and the energy barrier can be lowered and hence the combustion temperature can be largely lowered to 300-400°C and the energy required for the reproduction can be removed, whereby a DPF system having a high reproduction efficiency can be constructed together with the action of so-called ceria as mentioned above.

In the DPF suitable for an embodiment according to the present teaching, as shown in FIG. 5, when the catalyst coat layer 28 is formed on the ceramic filter 9 existing the large pores 21 and small pores (matrix) 22 in the surface layer portion and the inside of the catalyst carrier (cell walls), since the catalyst is uniformly coated on the surface of each of the ceramic particles C in the preferable embodiment according to the present teaching, the opened pores are narrowed in both of the large pores 21 and small pores 22 (matrix). Since the wall wherein the large pores 21 exist is relatively thinned by the catalyst as compared with the surrounding portion thereof, the pressure loss relatively lowers. Therefore, the exhaust gas easily flows into the large pores 21. Also, when NOx in the exhaust gas passes through the surface of the greater amount of the catalyst coat carried, it is occluded by contacting with NOx occlusion catalyst.

In addition, the PM layer 26, which is considered to be naturally deposited on the full surfaces of the catalyst carrier made of the ceramic sintered body as shown in FIG. 4(b) as mentioned above, is passed while contacting with the catalyst coat layer 28 on the inner faces of the large pores 21, whereby the contacting ratio of PM 27 with the catalyst coat layer 28 is increased.

Therefore, as shown in FIG. 5, PM 27 easily passes through the large pores 21 and is stored thereon, but since a greater amount of the catalyst, co-catalyst and NOx occlusion catalyst are carried thereon, they play a function as a filter indicating a high catalyst active reaction.

Such a filter is desirable to have a porosity of 50-80%. When it is lower than 50%, a ratio of forming closed cell by forming the large pores 21 and coating with the catalyst becomes large, while when it exceeds 80%, the gas flows through the whole of the filter walls irrespectively of the presence or absence of the large pores and it is considered that the above effect is not developed.

As mentioned above, the following functions_can be expected by the filter according to the present teaching: A. function as a filter

Low pressure loss, high catching efficiency, high strength

### B. function as a filter provided with catalyst

Improvement of NOx purification efficiency, decrease of rich spike time

### EXAMPLES

(1) Since the diesel particulate filter (DPF) according to the present teaching nas communicated pores comprising large pores 21 existing in surface layer portion and inside of the sintered body and small pores 22 existing in surface layer portion and inside of the sintered body, so that it is a state of increasing the effective filtering area in the sintered body 20. Therefore, even when the PM caught amount becomes large, the thickness of PM layer 26 hardly increases and the small value of pressure loss is maintained over a long time. Also, the small pores 22 are existent in the matrix of the sintered body 20, so that the high catching ability is provided as compared with the conventional one simply existing only the large pores 21. That is, the filters according to the present teaching provide the ceramic filter 9 establishing two conflicting properties, a low pressure loss in the deposition of the soot and a high filtering efficiency.
(2) According to the present teaching, filters F1, F2 made of the porous silicon carbide sintered body 20 are produced by adding the pore forming material 24 to the shaped body 19 and then firing at this state. Therefore, the large pores 21 are formed in places existing the pore forming material 24 after the firing. As a result, the large pores 21 having desired size and shape can be formed relatively simply and surely. Moreover, the pore forming material 24 disappears and hardly retains in the structure of the sintered body. Therefore, the deterioration of the properties in the sintered body 20 due to the inclusion of the impurity can be prevented and the DPF having a high quality can be surely obtained.
(3) According to the present teaching, the porous silicon carbide sintered body 20 can be produced efficiently and surely. That is, particles previously made from the synthetic resin or the like are used as the pore forming material 24, so that the pore forming material 24 is surely disappeared by heat at a relatively early stage before the sintering temperature of silicon carbide, concretely a degreasing stage. Further, since the synthetic resin generally has a relatively simple molecular structure as compared with the organic high polymer or the like, a possibility of producing a complicated compound by heating is small and the impurity causing the deterioration of the properties in the sintered body 20 is hardly left in the sintered body 20, so that the filter having a high purity (high silicon carbide ratio) can be produced from a relatively cheap material.
(4) According to the present teaching, the average particle size of the pore forming material 24 is set to the above range. Therefore, the porous silicon carbide sintered body 20 having a low pressure loss and a high filtering efficiency can be surely produced.

Moreover, the embodiment according to the present teaching can be modified as follows.
(a) The DPF is not limited to only the ceramic filter 9 as mentioned above, and may consist of, for example, a single porous silicon carbide sintered body 20.
(b) The DPF may be constructed by using the sintered body 20 in which the large pores 21 are existent in only the surface layer of the sintered body.
(c) The combination number of the filters F1, F2 is not limited to the above embodiment and may be optionally changed. In this case, it is naturally possible to use a proper combination of filters F1, F2 having different size, shape and the like.
(d) The filters F1, F2 are not limited to have a honeycomb structure as shown in the above embodiment, and may have, for example, a three-network structure, a foam-shaped structure, a noodle-shaped structure, a fiber-shaped structure and the like.
(e) Although the above embodiment is concretely explained with respect to the use of the porous ceramic sintered body 20 according to the present tracking as a filter for the exhaust gas purifying apparatus attached to the diesel engine 2, the sintered body may be used as a member other than the filter for the exhaust gas purifying apparatus and its relating apparatus. For example, there may be mentioned a filtering filter for a high-temperature fluid or a high-temperature steam, a filter for a plating liquid and the like. Further, the ceramic sintered body 20 is applicable to applications such as member for heat exchanging apparatus and the like other than the filter.

When the ceramic filter aggregate suitable for the present teaching has communicated pores consisting of large pores existing in the surface layer portion and inside of the sintered body and small pores existing in the surface layer and inside of the sintered body and the catalyst coat layer is formed thereon, the pressure loss is low, and PM and the exhaust gas concentratedly flows into the large pores, so that NOx occlusion effect easily occurs in botch places of the surface layer portion and inside of the ceramic carrier existing PM and the effective NOx purification ratio can be obtained.

As mentioned above, according to the present teaching, there can be proposed the porous ceramic sintered body suitable of the production of DPF being small in the pressure loss during the deposition of soot and having a high filtering efficiency.

Further, according to the present teaching, there can be proposed the production method capable of producing the above excellent porous ceramic sintered body efficiently and simply.

Moreover, according to the present teaching, there can be provided the DPF being small in the pressure loss during the deposition of soot and having a high filtering efficiency, which can be rendered into DPF being high in the NOx purification efficiency and short in the rich spike time.

Therefore, the present teaching is applicable as an exhaust gas purifying apparatus attached to a diesel engine, other exhaust gas purifying apparatuses, a filtering filter for high-temperature fluid or high-temperature steam, a filter for a plating liquid or a filter used for a thermal exchanging member.

## Claims

1. A method of producing a porous silicon carbide sintered body (20) constituted by silicon carbide particles (23) and having communicated pores constituted by small pores (22) and large pores (21) having a pore size larger than that of the small pores (22), and at least a part of the large pores (21) is existent on a surface of the sintered body (20) at an exposed or opened state, and the large pores (21) are formed by addition of a pore forming material (24) and the small pores (22) have an average pore size of 5 µm **-** 40 µm, and a size smaller than an average particle size of the silicon carbide particles (23) constituting the sintered body (20), the average pore size of the large pore is 30 µm - 80 µm, and the number of the large pores (21) existing at a state of exposing or opening to the surface of the sintered body (20) is 10 pores/mm² - 100 pores/mm², said
method, comprising at least a preparation step providing a slurry of starting ceramic using mixed particular of SiC particles consisting of small a size particles having an arrays particles size of 0,5-5 µm and large-sized particles having 10-30 µm and including the pore forming material (24) for forming the large pores (21), an extrusion shaping step charging the ceramic starting slurry through a mold to obtain a honeycomb shaped body, a firing step subjecting the honeycomb shaped body to drying, firing and degreasing, wherein the pore forming material (24) made of a substance disappearing by heating before the arrival to a sintering temperature of a ceramic is previously added to a green shaped body and then fired, wherein the pore forming material (24) has an average particle size of 30 µm - 80 µm.

2. A method of producing a porous silicon carbide sintered body (20) according to claim 1, wherein synthetic resin particles, metallic particles, or ceramic particles are used as the pore forming material (24).

## Patentansprüche

1. Verfahren zum Herstellen eines porösen Siliziumkarbid-Sinterkörpers (20), der aus Siliziumkarbid-Teilchen (23) gebildet ist und kommunizierende Poren aufweist, die von kleinen Poren (22) und großen Poren (21), deren Porengröße größer als diejenige der kleinen Poren (22) ist, gebildet wird, wobei wenigstens ein Teil der großen Poren (21) an einer Oberfläche des Sinterkörpers (20) in einem freigelegten oder geöffneten Zustand vorhanden ist und die großen Poren (21) durch Zugabe eines porenbildenden Materials (24) gebildet werden, wobei die kleinen Poren (22) eine Durchschnittsporengröße von 5 µm bis 40 µm und eine Größe aufweisen, die kleiner als eine Durchschnittsteilchengröße der den Sinterkörper (20) bildenden Siliziumkarbid-Teilchen (23) ist, wobei die Durchschnittsporengröße der großen Poren 30 µm bis 80 µm ist und die Anzahl der großen Poren (21), die in einem Zustand des Freiliegens oder Öffnens zur Oberfläche des Sinterkörpers (20) hin vorhanden ist, gleich 10 Poren/mm² bis 100 Poren/mm² ist, wobei das Verfahren umfasst:
wenigstens einen Präparationsschritt, der eine Aufschlämmung einer Ausgangskeramik bereitstellt, die gemischte Teilchen von SiC-Teilchen verwendet, die aus Teilchen kleiner Größe mit einer Durchschnittsteilchengröße von 0,5 bis 5µm und Teilchen großer Größe mit 10 bis 30 µm bestehen, und das porenbildende Material (24) zum Bilden der großen Poren (21) beinhaltet,
einen Extrusionsformungsschritt des Schickens der Keramikausgangsaufschlämmung durch eine Form, um einen wabenförmigen Körper zu erhalten,
einen Brennschritt, der den wabenförmigen Körper einem Trocknen, Brennen und
Entfetten unterzieht,
wobei das porenbildende Material (24), das aus einer Substanz besteht, die durch Erwärmen vor dem Erreichen einer Sintertemperatur einer Keramik verschwindet,
vorher einem ungebrannten geformten Körper zugeführt und sodann gebrannt wird,
wobei das porenbildende Material (24) eine Durchschnittsteilchengröße von 30 µm bis 80 µm aufweist.

2. Verfahren zum Herstellen eines porösen Siliziumkarbid-Sinterkörpers (20) nach Anspruch 1, wobei synthetische Harzteilchen, metallische Teilchen oder Keramikteilchen als porenbildendes Material (24) verwendet werden.

## Revendications

1. Procédé de réalisation d'un corps fritté en carbure de silicium poreux (20), constitué de particules de carbure de silicium (23) et comportant des pores en communication constitués de petits pores (22) et de grands pores (21) ayant une dimension de pore supérieure à celle des petits pores (22) et au moins une partie des grands pores (21) se trouve sur une surface du corps fritté (20) dans un état exposé ou ouvert, et
les grands pores (21) sont formés en ajoutant un matériau de formation de pore (24) et les petits pores (22) ont une dimension de pore moyenne de 5 µm à 40 µm et une taille plus petite que la taille moyenne des particules de carbure de silicium (23) constituant le corps fritté (20), la dimension moyenne de pore des grands pores est de 30 µm à 80 µm et le nombre de grands pores (21) se trouvant dans un état d'exposition ou d'ouverture à la surface du corps fritté (20) est de 10 pores/mm² à 100 pores/mm², ledit procédé comprenant au moins une étape de préparation pour fournir une boue de céramique de démarrage utilisant un mélange de particules de SiC constitué de particules de petite taille ayant des dimensions moyennes de particule de 0,5 µm à 5 µm et de particules de grande taille ayant de 10 µm à 30 µm, et incluant le matériau de formation de pore (24) pour former les grands pores (21), une étape de conformation d'extrusion effectuant le chargement de la boue de démarrage de céramique à travers un moule pour obtenir un corps en forme de nid d'abeille, une étape de cuisson pour soumettre le corps en forme de nid d'abeille à un séchage, une cuisson et à un dégraissage, dans lequel le matériau de formation de pore (24) fait d'une substance disparaissant par chauffage avant l'arrivée d'une température de frittage d'une céramique est ajouté au préalable à un corps de forme brute, puis cuit, dans lequel le matériau de formation de pore (24) possède une dimension moyenne de particules de 30 µm à 80 µm.

2. Procédé de réalisation d'un corps fritté en carbure de silicium poreux (20) selon la revendication 1, dans lequel on utilise comme matériau de formation de pore (24) des particules de résine synthétique, des particules métalliques ou des particules céramiques.
